# EUROPÄISCHE PATENTSCHRIFT

(11) **EP 3 623 267 B1**
(45) Veröffentlichungstag und Bekanntmachung des Hinweises auf die Patenterteilung: **06.04.2022**
(21) Anmeldenummer: 18194099.0
(22) Anmeldetag: 12.09.2018
(51) Int. Cl.: B62D 65/02, B62D 65/16

(54) **VORRICHTUNG ZUM VERSTELLEN EINES ERSTEN BAUTEILS UND EINES ZWEITEN BAUTEILS EINES PERSONEN- UND/ODER GÜTERTRANSPORTMITTELS RELATIV ZUEINANDER, SOWIE PERSONEN- UND/ODER GÜTERTRANSPORTMITTEL MIT EINER DERARTIGEN VORRICHTUNG**
DEVICE FOR ADJUSTING A FIRST COMPONENT AND A SECOND COMPONENT OF A PEDESTRIAN AND/OR GOODS TRANSPORT MEANS RELATIVE TO EACH OTHER, AND PASSENGER AND/OR GOODS TRANSPORT MEANS WITH SUCH A DEVICE
DISPOSITIF DE RÉGLAGE D'UN PREMIER COMPOSANT ET D'UN DEUXIÈME COMPOSANT D'UN MOYEN DE TRANSPORT DES PERSONNES ET / OU DES MARCHANDISES RELATIVES LES UNES AUX AUTRES AINSI QUE MOYEN DE TRANSPORT DES PERSONNES ET / OU DES MARCHANDISES DOTÉ D'UN TEL DISPOSITIF

(43) Veröffentlichungstag der Anmeldung: 18.03.2020
(73) Patentinhaber: Motherson Innovations Company Limited, London EC3A 6AP (GB); Illinois Tool Works Inc., Glenview, IL 60025 (US)
(72) Erfinder: Fischer, Eric, 79106 Freiburg (DE); Bleile, Claus, 79227 Schallstadt (DE); Gut, Dieter, 79235 Vogtsburg-Oberbergen (DE); Diez Herrera, Victor, 08203 Sabadell (Barcelona) (ES); Ammann, Thiemo, 67806 Rockenhausen (DE)
(74) Vertreter: Westphal, Mussgnug & Partner Patentanwälte mbB

(56) Entgegenhaltungen:
- EP-A1- 2 683 596
- EP-A1- 2 873 591
- EP-A2- 1 491 401
- EP-B1- 2 683 596
- DE-A1- 19 612 479
- DE-A1-102016 014 120
- FR-A1- 2 973 326
- US-A1- 2005 023 864

## Beschreibung

Die vorliegende Erfindung betrifft eine Vorrichtung zum Verstellen eines ersten Bauteils und eines zweiten Bauteils eines Personen- und/oder Gütertransportmittels relativ zueinander. Weiterhin betrifft die Erfindung ein Personen- und/oder Gütertransportmittel mit einer derartigen Vorrichtung.

Das Personen- und/oder Gütertransportmittel ist insbesondere als Fahrzeug ausgeführt, kann aber auch ein Schiff, ein Flugzeug, ein Zug oder dergleichen sein. Wenn im Folgenden die Erfindung in Bezug auf Fahrzeuge erläutert wird, gelten die Ausführungen gleichermaßen auch für andere Personen- und/oder Gütertransportmittel wie Schiffe, Flugzeuge, Züge oder dergleichen.

Die insbesondere bei Fahrzeugen als Verkaufsargument wichtige Qualitätsanmutung wird unter anderem von einem gleichmäßigen und geringen Maß der sichtbaren Fugen geprägt, mit dem zwei benachbarte Bauteile, bei Fahrzeugen beispielsweise die Motorhaube, der Scheinwerfer und der Stoßfänger, benachbart zueinander angeordnet sind. Aufgrund von Schwankungen in der Fertigung sind die Bauteile jedoch nie exakt gleich groß, so dass sich bei jedem Fahrzeug ein anderes Fugenmaß einstellt. Um dennoch ein gleichmäßiges Fugenmaß zu erhalten, wird das Fugenmaß bei jedem Fahrzeug gesondert auf folgende Weise vorgegangen: Zumindest eines der beiden benachbart angeordneten Bauteile ist in einem gewissen Umfang beweglich am Fahrzeug montiert. Die Bewegung wird üblicherweise mittels einer Exzenterscheibe erzeugt, die zwischen dem bewegbaren Bauteil und einem Träger, auf den das bewegliche Bauteil abgestützt ist, drehbar angeordnet ist. Durch Drehen der Exzenterscheibe kann das betreffende Bauteil zum benachbart angeordneten Bauteil hin oder von diesem weg bewegt werden. Hierdurch kann das Fugenmaß eingestellt werden.

Um mittels der Exzenterscheibe das betreffende Bauteil zum benachbart angeordneten Bauteil hin zu bewegen oder von diesem weg zu bewegen, ist üblicherweise ein vergleichsweise hoher Kraftaufwand notwendig, der vom betreffenden Mitarbeiter des Fahrzeugherstellers aufgebracht werden muss. Üblicherweise weist die Exzenterscheibe eine Aufnahme für einen Schraubenschlüssel auf, mit welchem der Mitarbeiter die hierzu notwendige Kraft aufbringen kann. Da jedoch der Kraftaufwand vergleichsweise hoch ist, das Fugenmaß aber sehr genau eingestellt werden muss, kann es einen erheblichen Zeitaufwand bedeuten, dass Fugenmaß wie vorgegeben einzustellen. Weiterhin ist die Wirksamkeit der Exzenterscheibe gering. Darüber hinaus neigt die Exzenterscheibe dazu, sich infolge der im Betrieb des Fahrzeugs auftretenden Vibrationen zu verstellen, wodurch sich auch das eingestellte Fugenmaß ändert.

Die EP 2 683 596 A1 offenbart eine Vorrichtung zum Einstellen des Fugenmaßes ohne eine Exzenterscheibe, allerdings kann mit der dort gezeigten Vorrichtung nicht zuverlässig verhindert werden, dass sich das einmal eingestellte Fugenmaß im Betrieb des Fahrzeugs ändert.

Weitere derartige Vorrichtungen sind in der US 2005/023864 A1, der EP 2 873 591 A1, der EP 1 491 401 A2, der EP 2 683 596 A1, der FR 2 973 326 A1, der DE 10 2016 014120 A1 und der DE 196 12 479 A1 offenbart.

Aufgabe einer Ausführungsform der vorliegenden Erfindung ist es, eine Vorrichtung anzugeben, mit welcher es mit einfachen und kostengünstigen Mitteln möglich ist, das Fugenmaß eines ersten Bauteils und eines zweiten Bauteils eines Personenund/oder Gütertransportmittels in kurzer Zeit wie vorgegeben einzustellen, wobei das einmal eingestellte Fugenmaß auch unter den im Betrieb auftretenden Vibrationen aufrecht erhalten werden soll. Des Weiteren liegt einer Ausgestaltung der vorliegenden Erfindung die Aufgabe zugrunde, ein Personenund/oder Gütertransportmittel mit einer derartigen Vorrichtung bereitzustellen.

Diese Aufgabe wird mit den in den Ansprüchen 1, 6, 9, 10 und 15 angegebenen Merkmalen gelöst. Vorteilhafte Ausführungsformen sind Gegenstand der Unteransprüche.

Eine Ausführungsform der Erfindung betrifft eine Vorrichtung zum Verstellen eines ersten Bauteils und eines zweiten Bauteils eines Personen- und/oder Gütertransportmittels relativ zueinander, wobei die beiden Bauteile unter Ausbildung einer Fuge benachbart zueinander angeordnet sind, umfassend einen Grundkörper, ein entlang einer ersten Achse und/oder um die erste Achse bewegbar im Grundkörper gelagertes Verstellelement, einen entlang einer zweiten Achse bewegbar im Grundkörper gelagerten Stellkörper, der derart mit dem Verstellelement zusammenwirkt, dass die Bewegung des Verstellelements entlang der ersten Achse oder um die erste Achse in einen Bewegung des Stellkörpers und/oder des Verstellelements entlang der zweiten Achse umgewandelt wird, wobei die Bewegung des Stellkörpers und/oder des Verstellelements entlang der zweiten Achse auf das erste Bauteil oder das zweite Bauteil übertragbar ist, und eine Fixiereinrichtung zum Fixieren des Verstellelements und des Stellkörpers in einer wählbaren Position.

Unter einem Verstellelement soll ein Element verstanden werden, welches von einer Person, beispielsweise von einem Mitarbeiter des Herstellers des Personen- und/oder Gütertransportmittels oder einer Reparaturwerkstatt, vorzugsweise mittels eines geeigneten Werkzeugs betätigt werden kann. Der Stellkörper wandelt die Bewegung des Verstellelements entlang der ersten Achse und/oder um die erste Achse in eine Bewegung entlang der zweiten Achse um.

Vorschlagsgemäß wirken in der Vorrichtung zwei Einheiten zusammen, nämlich das Verstellelement und der Stellkörper. Das Zusammenwirken kann derart gestaltet werden, dass eine Übersetzung bei der Umwandlung der Bewegung des Verstellelements in die Bewegung des Stellkörpers bewirkt wird. Hierdurch ist es möglich, den zum Verstellen des ersten Bauteils und des zweiten Bauteils relativ zueinander benötigten Kraftaufwand gering zu halten. Darüber hinaus weist die vorschlagsgemäße Vorrichtung die Fixiereinrichtung auf, mit welcher die Position des Stellelements und des Stellkörpers in einer wählbaren Position fixierbar ist. Hieraus folgt, dass sich auch die beiden relativ zueinander bewegbar Bauteile nicht mehr relativ zueinander bewegen können, sobald die Position des Verstellelements und des Stellkörpers fixiert worden ist. Wie eingangs erwähnt, kann sich das Fugenmaß bei bekannten Personenund/oder Gütertransportmitteln infolge von im Betrieb auftretenden Belastungen und Vibrationen verstellen. Eine derartige Verstellung im Betrieb des Personen- und/oder Gütertransportmittels wird mittels der Fixiereinrichtung verhindert. Folglich bleibt das einmal eingestellte Fugenmaß erhalten. Der eingangs erwähnte Qualitätseindruck des betreffenden Personenund/oder Gütertransportmittels verschlechtert sich damit im Betrieb bezüglich des Fugenmaßes nicht.

Erfindungsgemäß ist das Verstellelement als eine Schraube mit einem Schraubenkopf ausgebildet. Schrauben sind ein vielfach verwendetes Mittel, um eine Drehbewegung in eine Längsbewegung umzuwandeln. Sie sind kostengünstig beziehbar und einfach zu bedienen. Um zu verhindern, dass sich die Schraube unter den im Betrieb auftretenden Belastungen und Vibrationen löst und eine unkontrollierte Drehung durchführt, kann die Schraube beispielsweise mit Federscheiben oder anderen Schraubensicherungselementen gesichert werden, die in diesem Fall als Fixiereinrichtung wirken.

Erfindungsgemäß ist die Fixiereinrichtung als ein selbsthemmendes Gewinde der Schraube ausgebildet. Die üblicherweise bei Schrauben verwendeten Gewinde sind ohnehin selbsthemmend, wobei dies nicht ausschließt, dass sich die betreffenden Schrauben im Betrieb unkontrolliert drehen können. In dieser Ausführungsform kann das Gewinde in einem besonderen Umfang selbsthemmend ausgeführt werden, beispielsweise dadurch, dass die Steigung des Gewindes besonders gering ist. In diesem Fall wirkt die Schraube nicht nur als das Verstellelement, sondern gleichzeitig auch als die Fixiereinrichtung, so dass die Vorrichtung nach diesem Ausführungsbeispiel mit besonders wenigen Bauelementen auskommt und daher eine geringe Komplexität aufweist.

Nach einer weiteren Ausführungsform ist der Stellkörper insbesondere über einen Ausleger um einen Drehpunkt drehbar im Grundkörper gelagert, insbesondere um einen senkrecht zur ersten Achse und zur zweiten Achse gerichtete Drehpunkt. Der Stellkörper weist eine erste Kontaktfläche zur Beaufschlagung durch den Schraubenkopf der Schraube, die im Wesentlichen senkrecht zur ersten Achse ausgerichtet ist, und eine zweite Kontaktfläche zur Kontaktierung des ersten Bauteils oder des zweiten Bauteils auf, die im Wesentlichen senkrecht zur zweiten Achse ausgerichtet ist. Hierdurch wird auf einfache Art und Weise eine Richtungsumlenkung der Verstellbewegung erreicht. Hierzu weist der Grundkörper insbesondere ein zur Schraube passendes Innengewinde auf, welches in Richtung der ersten Achse ausgerichtet ist. Insbesondere weist der Stellkörper eine Öffnung zur Durchführung der Schraube auf, und die erste Kontaktfläche ist durch die die Öffnung umgebende Fläche gebildet.

Nach Maßgabe einer weiteren Ausführungsform weist der Stellkörper zumindest zwei, insbesondere einen in etwa L-förmigen Stellkörper bildende, Schenkel auf, die zueinander im Bereich von 45° bis 135°, insbesondere in etwa 90° abgewinkelt sind, wobei der Drehpunkt im Verbindungspunkt der beiden Schenkel angeordnet ist und wobei die erste Kontaktfläche an dem einen Schenkel und die zweite Kontaktfläche an dem anderen Schenkel ausgebildet ist. Hierdurch wird auf einfach Art und Weise ein entsprechender Stellkörper realisiert.

Eine fortgebildete Ausführungsform zeichnet sich dadurch aus, dass mindestens eine, bevorzugt beide der ersten und zweiten Kontaktflächen konvex gewölbt sind, womit bewirkt wird, dass auch in verschiedenen Drehpositionen um den Drehpunkt die jeweilige Kontaktfläche im Wesentlichen senkrecht zur ersten Achse oder zweiten Achse ausgerichtet ist. Hierdurch wird der Kontakt zu dem Bauteil bzw. zur Schraube verbessert.

Nach einer weitergebildeten Ausführungsform ist die erste Kontaktfläche in einem anderen, insbesondere geringerem, Abstand zum Drehpunkt angeordnet als die zweite Kontaktfläche. Hierdurch kann eine vorteilhafte Übersetzung durch Festlegung der unter-schiedlichen Abstände bestimmt werden.

Bei einer erfindungsgemäßen Ausbildung der Vorrichtung kann das Verstellelement als eine Schraube ausgebildet sein, wobei der Stellkörper als ein auf der Schraube insbesondere ortsfest angeordneter Exzenterkörper ausgebildet ist. Der Exzenterkörper ermöglicht es, den Stellkörper raumsparend und einfach auszugestalten. Hierdurch kann die gesamte Vorrichtung kompakt gestaltet werden und auch dort angeordnet werden, wo der zur Verfügung stehende Bauraum begrenzt ist.

Bei einer weiteren Ausführungsform kann der Exzenterkörper eine wendelförmige Auflagefläche mit einem sich in Bezug auf die erste Achse ändernden Radius aufweisen, wobei sich der Exzenterkörper auf einem Auflageabschnitt des Grundkörpers abstützt. In dieser Ausführungsform wird eine besonders gute Führung des Exzenterkörpers in Bezug auf den Grundkörper bereitgestellt, wodurch die beiden relativ zueinander zu verstellenden Bauteile ebenfalls sehr präzise bewegt werden können. Das Fugenmaß kann folglich sehr genau eingestellt werden.

Eine weitergebildete Ausführungsform zeichnet sich dadurch aus, dass die Fixiereinrichtung einen am Grundkörper angeordneten und mit dem Exzenterkörper zusammenwirkenden Reibabschnitt umfasst. In dieser Ausführungsform kann die Fixiereinrichtung besonders einfach ausgebildet sein, nämlich dadurch, dass der Exzenterkörper gegen den Reibabschnitt des Grundkörpers gedrückt wird. Folglich muss eine Reibkraft überwunden werden, welche verhindert, dass sich die Schraube im Betrieb des Personen- und/oder Gütertransportmittels unkontrolliert dreht und sich das eingestellte Fugenmaß ändert.

Eine Ausbildung der Erfindung ist dadurch gekennzeichnet, dass das Verstellelement eine Spindel und der Stellkörper eine auf der Spindel angeordnete Spindelmutter und ein Scherenpaar mit zwei Scherengliedern umfasst, wobei die Spindelmutter drehfest mit dem Scherenpaar befestigt ist, wobei das erste der Scherenglieder drehbar am Grundkörper und das andere der Scherenglieder drehfest mit einem Auflagekörper befestigt ist, auf welchem das erste Bauteil oder das zweite Bauteil auflegbar ist, oder das erste der Scherenglieder drehbar am Grundkörper befestigt und das andere der Scherenglieder drehfest am ersten Bauteil oder dem zweiten Bauteil befestigbar ist. Die Verwendung des Scherenpaares ermöglicht es, das betreffende Bauteil sehr präzise relativ zum zweiten Bauteil zu bewegen. Das Fugenmaß lässt sich daher sehr genau einstellen. Darüber hinaus ist es mittels des Scherenpaares möglich, große Übersetzungsverhältnisse zu realisieren, so dass auch schwere Bauteile ohne einen unvertretbar großen Kraftaufwand für den die Bauteile montierenden Mitarbeiter relativ zueinander bewegt werden können, um das gewünschte Fugenmaß einzustellen.

Eine weitere Ausführungsform zeichnet sich dadurch aus, dass das Verstellelement eine Spindel und der Stellkörper einen auf der Spindel oder um die Spindel angeordneten Spindelkeil umfasst, und der Grundkörper einen zum Spindelkeil korrespondierenden Keilabschnitt aufweist, wobei sich der Spindelkeil auf dem Keilabschnitt abstützt oder umgekehrt. Der Spindelkeil und der Keilabschnitt weisen jeweils eine sehr einfache geometrische Form auf, so dass sich diese Ausführungsform durch eine einfache Formgebung auszeichnet. Darüber hinaus wirken der Spindelkeil und der korrespondierenden Keilabschnitt als die Fixiereinrichtung, da zwischen ihnen eine besonders hohe Reibkraft wirkt, welche ein Verstellen des Fugenmaßes im Betrieb verhindert.

Eine fortgebildete Ausführungsform gibt vor, dass die Fixiereinrichtung ein mit dem Verstellelement drehfest und axial auf dem Verstellelement verschiebbares Sperrelement aufweist, wobei das Sperrelement zwischen einer Sperrstellung, in welcher das Sperrelement die Drehung des Verstellelements um die erste Achse sperrt, und einer Offenstellung, in welcher das Sperrelement die Drehung des Verstellelements ermöglicht, axial verschiebbar ist. In dieser Ausführungsform muss der Mitarbeiter beim Einstellen des Fugenmaßes das Sperrelement aus der Sperrstellung zunächst in die Offenstellung bewegen, bevor er die beiden betreffenden Bauteile relativ zueinander bewegen und das Fugenmaß einstellen kann. Ist das vorgesehene Fugenmaß erreicht, stellt der Mitarbeiter das Sperrelement zurück in die Sperrstellung, in welcher eine Drehung des Verstellelements verhindert wird. Infolgedessen wird darüber hinaus verhindert, dass sich die beiden betreffenden Bauteile im Betrieb relativ zueinander verstellen können und sich das Fugenmaß ändert.

Gemäß einer weiteren Ausführungsform ist das Verstellelement als ein drehbar im Grundkörper gelagertes Zahnrad ausgebildet, welches mit dem als eine entlang der zweiten Achse beweglichen Zahnstange ausgebildeten Stellkörper in kämmenden Eingriff steht. Mithilfe des Zahnrads und der mit dem Zahnrad in kämmenden Eingriff stehenden Zahnstange können große Übersetzungsverhältnisse auf engem Raum bereitgestellt werden, so dass auch schwerere Bauteile auf das vorgesehene Fugenmaß gebracht werden können, ohne dass ein unvertretbar hoher Kraftaufwand von dem diese Bauteile montierenden Mitarbeiter aufgebracht werden muss.

Nach einer Variante der Erfindung ist zwischen dem Zahnrad und der Zahnstange ein drehbar im Grundkörper gelagertes Zwischenzahnrad angeordnet. Auch das Zwischenzahnrad dient dazu, die Übersetzungsverhältnisse zu erhöhen und dadurch das Einstellen des Fugenmaßes für den Mitarbeiter besonders einfach zu machen.

Zudem kann in einer weiteren Ausführungsform vorgesehen sein, dass das Zahnrad als ein Kegelrad ausgebildet ist. Mithilfe des Kegelrades kann die Zugänglichkeit des Verstellelements entsprechend den Anforderungen der Fertigung gewählt werden. Darüber hinaus ist es auch möglich, die vorschlagsgemäße Vorrichtung an schwer zugänglichen Stellen einzusetzen, so dass auch Bauteile auf das gewünschte Fugenmaß gebracht werden können, deren Fugenmaß bislang noch nicht einstellbar war. Hierdurch lässt sich der Qualitätseindruck des betreffenden Personen- und/oder Gütertransportmittels weiter steigern.

Eine weiterführende Ausführungsform zeichnet sich dadurch aus, dass das Zahnrad axial verschiebbar im Grundkörper gelagert ist, wobei das Zahnrad zwischen einer Sperrstellung, in welcher die Drehung des Verstellelements um die erste Achse gesperrt ist, und einer Offenstellung, in welcher die Drehung des Verstellelements möglich ist, axial verschiebbar ist. In dieser Ausführungsform muss der Mitarbeiter beim Einstellen des Fugenmaßes das Zahnrad aus der Sperrstellung zunächst in die Offenstellung bewegen, bevor er die beiden betreffenden Bauteile relativ zueinander bewegen und das Fugenmaß einstellen kann. Ist das vorgesehene Fugenmaß erreicht, stellt der Mitarbeiter das Zahnrad zurück in die Sperrstellung, in welcher eine Drehung des Verstellelements verhindert wird. Infolgedessen wird darüber hinaus verhindert, dass sich die beiden betreffenden Bauteile im Betrieb relativ zueinander verstellen können und sich das Fugenmaß ändert.

Gemäß einer weiteren Ausführungsform weist der Grundkörper einen zum Zahnrad korrespondierenden Sperrabschnitt auf, in welchen das Zahnrad in der Sperrstellung formschlüssig eingreift. Der Sperrabschnitt lässt sich in dieser Ausführungsform besonders einfach fertigen.

Eine Ausbildung der Erfindung betrifft ein Personen- und/oder Gütertransportmittel, umfassend ein erstes Bauteil und ein zweites Bauteil, wobei die beiden Bauteile unter Ausbildung einer Fuge benachbart zueinander angeordnet sind, und eine Vorrichtung nach einem der zuvor erläuterten Ausführungsformen, wobei das erste Bauteil und das zweite Bauteil mittels der Vorrichtung relativ zueinander verstellbar sind, wodurch das Fugenmaß der Fuge veränderbar ist.

Die technischen Effekte und Vorteile, die sich mit dem vorschlagsgemäßen Personen- und/oder Gütertransportmittel erreichen lassen, entsprechen denjenigen, die für die vorliegende Vorrichtung zum Verstellen eines ersten Bauteils und eines zweiten Bauteils erörtert worden sind. Zusammenfassend sei darauf hingewiesen, dass sich einerseits das Fugenmaß mit einem geringen Kraftaufwand wie vorgegeben einstellen lässt, auch wenn das zu bewegende Bauteil relativ schwer ist. Andererseits wird mittels der Fixiereinrichtung verhindert, dass sich das einmal eingestellte Fugenmaß infolge der im Betrieb des Personen- und/oder Gütertransportmittels auftretenden Vibrationen und Belastungen unkontrolliert ändert.

Beispielhafte Ausführungsformen der Erfindung werden im Folgenden unter Bezugnahme auf die beigefügten Zeichnungen näher erläutert. Es zeigen
- Figur 1: eine prinzipielle Schnittdarstellung eines ersten Bauteils und eines zweiten Bauteils eines Personen- und/oder Gütertransportmittels und einer erfindungsgemäßen Vorrichtung, mit welcher die Bauteile relativ zueinander verstellbar sind,
- Figur 2: eine prinzipielle Darstellung eines ersten Ausführungsbeispiels einer erfindungsgemäßen Vorrichtung,
- Figuren 3A und 3B: ein zweites Ausführungsbeispiel eines zweiten Ausführungsbeispiels der erfindungsgemäßen Vorrichtung anhand einer perspektivischen Darstellung bzw. anhand einer Seitenansicht,
- Figur 4: ein drittes Ausführungsbeispiel der erfindungsgemäßen Vorrichtung anhand einer Seitenansicht,
- Figur 5A: ein viertes Ausführungsbeispiel der erfindungsgemäßen Vorrichtung anhand einer Seitenansicht,
- Figur 5B: ein vergrößerter Ausschnitt des in Figur 5A gezeigten vierten Ausführungsbeispiels,
- Figur 6: ein fünftes Ausführungsbeispiel der erfindungsgemäßen Vorrichtung anhand einer Seitenansicht,
- Figur 7: ein sechstes Ausführungsbeispiel der erfindungsgemäßen Vorrichtung anhand einer Seitenansicht,
- Figur 8A: ein siebtes Ausführungsbeispiel der erfindungsgemäßen Vorrichtung anhand einer Seitenansicht,
- Figur 8B: eine perspektivische isolierte Darstellung des Spindelteils der Vorrichtung nach Figur 8A,
- Figur 9A: eine prinzipielle Seitenansicht eines achten Ausführungsbeispiels der erfindungsgemäßen Vorrichtung,
- Figur 9B: eine prinzipielle Schnittdarstellung des in Figur 9A dargestellten achten Ausführungsbeispiels entlang der in Figur 9A definierten Schnittebene A-A, wobei sich die erfindungsgemäße Vorrichtung in einer Offenstellung befindet,
- Figur 9C: das in Figur 9A dargestellte achte Ausführungsbeispiel ebenfalls entlang der in Figur 9 an definierten Schnittebene A-A, wobei sich die erfindungsgemäße Vorrichtung in einer Sperrstellung befindet,
- Figur 10A: ein neuntes Ausführungsbeispiel der erfindungsgemäßen Vorrichtung anhand einer perspektivischen Darstellung,
- Figur 10B: eine Teilschnittdarstellung des in Figur 10A dargestellten neunten Ausführungsbeispiels, wobei sich die erfindungsgemäße Vorrichtung in einer Sperrstellung befindet, und
- Figur 10C: eine Teilschnittdarstellung des neunten Ausführungsbeispiels, wobei sich die erfindungsgemäße Vorrichtung in einer Offenstellung befindet.

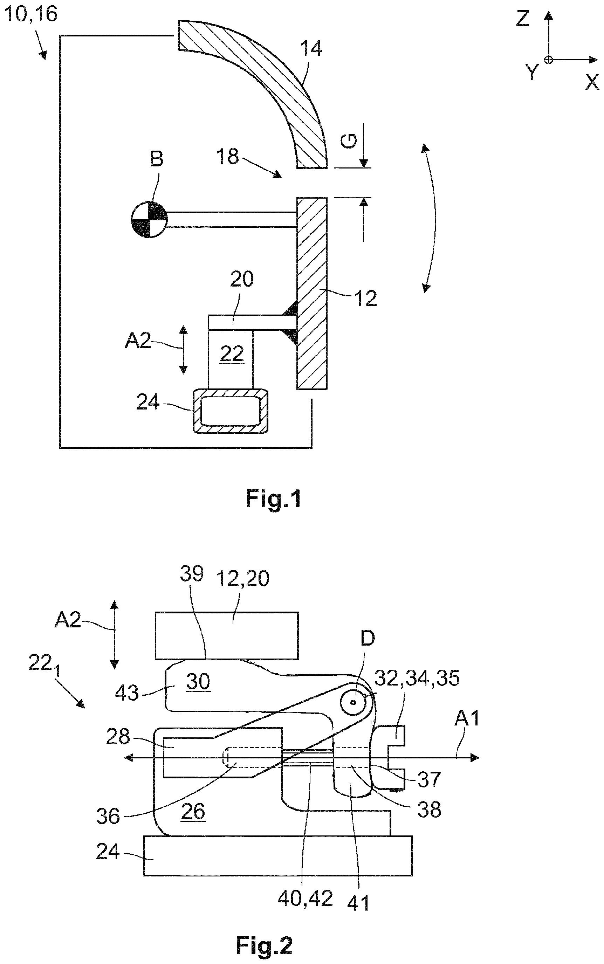

In Figur 1 ist ein Personen- und/oder Gütertransportmittel 10 anhand einer prinzipiellen Darstellung gezeigt, welches ein erstes Bauteil 12 und ein zweites Bauteil 14 aufweist. In allen nachfolgend beschriebenen Ausführungsbeispielen soll das Personen- und/oder Gütertransportmittel 10 als ein Fahrzeug 16, insbesondere als ein Kraftfahrzeug, ausgeführt sein, wobei jedoch die nachfolgenden Ausführungsformen im Wesentlichen auch für andere Ausführungsformen des Personen- und/oder Gütertransportmittels 10 wie Züge, Schiffe oder Flugzeuge gleichermaßen gelten.

Das erste Bauteil 12 kann beispielsweise ein Stoßfänger oder ein Scheinwerfer sein, wohingegen das zweite Bauteil 14 beispielsweise eine Motorhaube sein kann. Das erste Bauteil 12 und das zweite Bauteil 14 sind unter Ausbildung einer Fuge 18 mit dem Fugenmaß G benachbart angeordnet, wobei die Fuge 18 von außen sichtbar ist. Das erste Bauteil 12 ist um einen Befestigungspunkt B drehbar am Fahrzeug 16 befestigt, wobei eine axial verschiebbare Lagerung ebenfalls denkbar ist. Weiterhin weist das erste Bauteil 12 einen Vorsprung 20 auf, welcher mit einer erfindungsgemäßen Vorrichtung 22 zum Verstellen des ersten Bauteils 12 relativ zum zweiten Bauteil 14 zusammenwirkt. Im dargestellten Beispiel soll sich das zweite Bauteil 14 bezogen auf die bestimmungsgemäße Ausrichtung des Fahrzeugs 16 über dem ersten Bauteil 12 befinden. Bezugnehmend auf Figur 1 stützt sich die Vorrichtung 22 nach unten auf einem Träger 24 des Fahrzeugs 16 ab.

Der Abstand des die Fuge 18 bildenden Teils des ersten Bauteils 12 zum Befestigungspunkt B ist so gewählt, dass aufgrund der Betätigung der erfindungsgemäßen Vorrichtung 22 hauptsächlich eine Bewegung des ersten Bauteils 12 in Z-Richtung bewirkt, wodurch das Fugenmaß G der Fuge 18 entsprechend verändert werden kann. Üblicherweise beträgt das Fugenmaß G weniger als 1 cm. Aufgrund der Tatsache, dass das zweite Bauteil 14 über dem ersten Bauteil 12 angeordnet ist, muss das erste Bauteil 12 gegen die Gravitationskraft bewegt werden. Folglich ist die Einstellung des Fugenmaßes G in diesem Fall besonders schwierig. Allerdings kann die erfindungsgemäße Vorrichtung 22 gleichermaßen für den Fall angewendet werden, in welchem das erste Bauteil 12 und das zweite Bauteil 14 nebeneinander oder in anderen Ausrichtungen zueinander angeordnet sind.

In Figur 2 ist ein erstes Ausführungsbeispiel der erfindungsgemäßen Vorrichtung 22₁ anhand einer prinzipiellen Seitenansicht gezeigt. Die Vorrichtung 22₁ umfasst einen Grundkörper 26, der auf dem bereits erwähnten Träger 24 aufliegt, so dass sich die Vorrichtung 22₁ auf dem Träger 24 abstützen kann. Weiterhin ist am Grundkörper 26 ein Ausleger 28 befestigt, an dem ein L-förmiger Stellkörper 30 um einen Drehpunkt D drehbar befestigt ist, wobei der Drehpunkt D auch als eine Drehachse D aufgefasst werden kann. Im dargestellten Fall ist der Ausleger 28 als ein separates Bauteil ausgebildet, wobei er auch als integraler Bestandteil des Grundkörpers 26 ausgebildet sein kann, so dass der Grundkörper 26 einstückig ist. Der Stellkörper 30 liegt an seinem oberen Ende am bereits beschriebenen Vorsprung 20 des ersten Bauteils 12 an (siehe Figur 1). Zudem umfasst die erfindungsgemäße Vorrichtung 22₁ gemäß dem ersten Ausführungsbeispiel ein Verstellelement 32, welches als eine um eine erste Achse A1 drehbare Schraube 34 ausgeführt ist. Die Schraube 34 ist in eine im Grundkörper 26 angeordnete Gewindebohrung 36 teilweise eingeschraubt. Zudem ist die Schraube 34 durch eine Durchgangsbohrung 38 des Stellkörpers 30 durchgesteckt, wobei der Schraubenkopf 35 der Schraube 34 am Stellkörper 30 anliegt.

Der Stellkörper 30 weist eine erste Kontaktfläche 37 zur Beaufschlagung mit dem Schraubenkopf 35 der Schraube 34 auf, die im Wesentlichen senkrecht zur ersten Achse A1 ausgerichtet ist. Weiterhin weist der Stellkörper 30 eine zweite Kontaktfläche 39 zur Kontaktierung des ersten Bauteils 12 auf, die im Wesentlichen senkrecht zur zweiten Achse A2 ausgerichtet ist.

Der Stellkörper 30 weist im ersten Ausführungsbeispiel zwei Schenkel 41, 43 auf, die dem Stellkörper 30 eine in etwa L-förmige Gestaltung geben. Die beiden Schenkel 41, 43 sind zueinander in etwa um 90° abgewinkelt, wobei der Drehpunkt D im Verbindungsbereich der beiden Schenkel 41, 43 angeordnet ist und wobei die erste Kontaktfläche 37 an dem einen Schenkel 41 und die zweite Kontaktfläche 39 an dem anderen Schenkel 43 ausgebildet ist.

Im ersten Ausführungsbeispiel sind sowohl die erste Kontaktfläche 37 als auch die zweite Kontaktfläche 39 konvex gewölbt, womit bewirkt wird, dass auch in verschiedenen Drehpositionen um den Drehpunkt D die jeweilige Kontaktfläche 41, 43 im Wesentlichen senkrecht zur ersten Achse A1 oder zweiten Achse A2 ausgerichtet. Darüber hinaus ist die erste Kontaktfläche 37 in einem geringeren Abstand zum Drehpunkt D angeordnet als die zweite Kontaktfläche 39.

Darüber hinaus weist die erfindungsgemäße Vorrichtung 22₁ gemäß dem ersten Ausführungsbeispiel eine Fixiereinrichtung 40 auf, welche bewirkt, dass die einmal eingestellte Position des Verstellelements 32 und folglich des Stellkörpers 30 fixiert wird und auch bei Belastungen im Betrieb des Fahrzeugs 16 nicht verändert wird. Im dargestellten Ausführungsbeispiel umfasst die Fixiereinrichtung 40 ein auf der Schraube 34 angeordnetes selbsthemmendes Gewinde 42, sie kann aber alternativ oder kumulativ beispielsweise nicht dargestellte Federscheiben oder andere Schraubensicherungselemente umfassen.

Soll das Fugenmaß G der in Figur 1 dargestellten Fuge 18 zwischen dem ersten und dem zweiten Bauteil 12, 14 verändert werden, wird wie folgt vorgegangen: Die Schraube 34 wird mit einem passenden Werkzeug um die erste Achse A1 gedreht. Je nach Drehrichtung wird die Schraube 34 weiter in die Gewindebohrung 36 eingeschraubt oder aus dieser heraus bewegt, so dass die Schraube 34 entlang der ersten Achse A1 bewegt wird. Infolgedessen wird eine Drehung des Stellkörpers 30 bewirkt. Der Drehpunkt D und die Ausrichtung des Stellkörpers 30 sind so gewählt, dass die Drehbewegung um den Drehpunkt D im hier relevanten Bereich hauptsächlich eine axiale Bewegung des Stellkörpers 30 entlang einer zweiten Achse A2 aufweist, die senkrecht auf der ersten Achse A1 steht. Bezogen auf die Figur 1 fällt die zweite Achse A2 mit der Z-Richtung zusammen. Die Drehung des Stellkörpers 30 bewirkt, dass sich das erste Bauteil 12 entweder zum zweiten Bauteil 14 hin oder vom zweiten Bauteil 14 weg bewegt. Infolgedessen wird das Fugenmaß G verringert oder vergrößert. Folglich ist es möglich, das Fugenmaß G durch Drehen der Schraube 34 wie vorgegeben einzustellen. Aufgrund der Tatsache, dass die Schraube 34 das selbsthemmende Gewinde 42 aufweist, bleibt diese in einer einmal gewählten Position stehen, ohne sich unkontrolliert beispielsweise infolge von Vibrationen und Belastungen, die im Betrieb des Fahrzeugs 16 auftreten, zu drehen. Das einmal eingestellte Fugenmaß G verändert sich daher nicht.

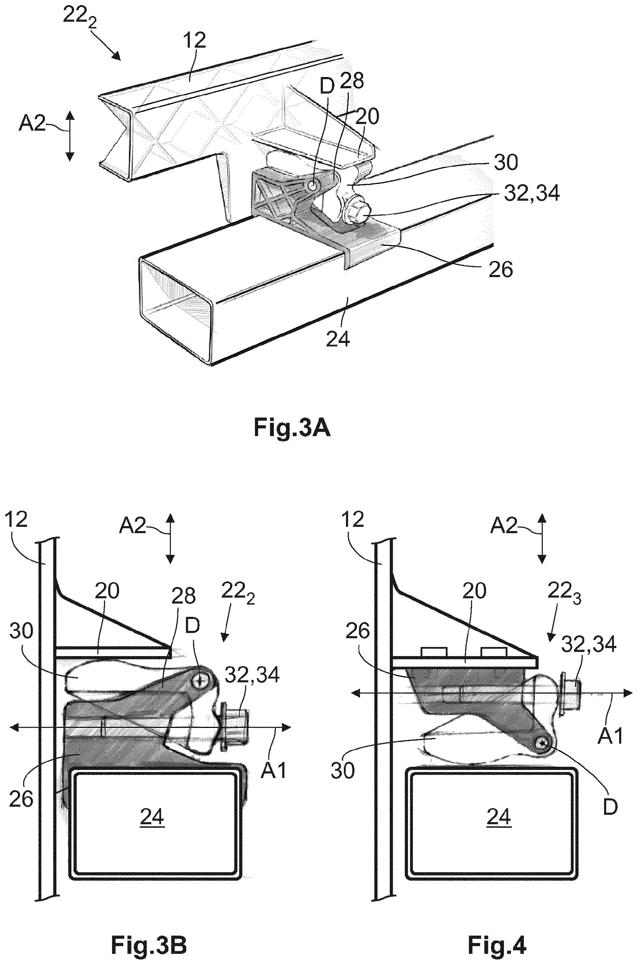

In den Figuren 3A und 3B ist ein zweites Ausführungsbeispiel der erfindungsgemäßen Vorrichtung 22₂ anhand einer perspektivischen Darstellung bzw. einer Seitenansicht gezeigt. Die erfindungsgemäße Vorrichtung 22₁ gemäß dem zweiten Ausführungsbeispiel entspricht im Wesentlichen dem ersten Ausführungsbeispiel, allerdings ist der Ausleger 28 in diesem Fall einstückig mit dem Grundkörper 26 ausgebildet.

In Figur 4 ist ein drittes Ausführungsbeispiel der erfindungsgemäßen Vorrichtung 22₃ anhand einer Seitenansicht dargestellt. Der grundsätzliche Aufbau der erfindungsgemäßen Vorrichtung 22₁ nach dem dritten Ausführungsbeispiel gleicht dabei demjenigen der erfindungsgemäßen Vorrichtung 22₁, 22₂ nach dem ersten bzw. dem zweiten Ausführungsbeispiel, allerdings ist die Vorrichtung 22₃ um 180° gedreht im Fahrzeug 16 montiert. Infolgedessen ist der Grundkörper 26 in diesem Fall am Vorsprung 20 des ersten Bauteils 12 befestigt und stützt sich demnach nicht am Träger 24 des Fahrzeugs 16 ab. Weiterhin liegt der Stellkörper 30 nicht am Vorsprung 20 des ersten Bauteils 12 an, sondern am Träger 24 des Fahrzeugs 16. Die Einstellung des Fugenmaßes G erfolgt auf die oben beschriebene Weise.

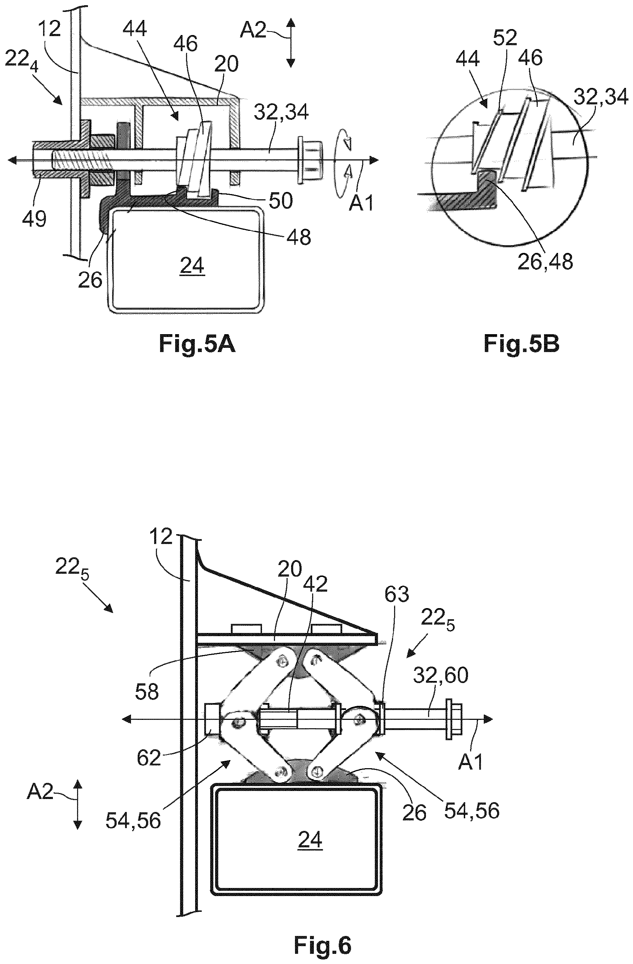

In Figur 5A ist ein viertes Ausführungsbeispiel der erfindungsgemäßen Vorrichtung 22₄ anhand einer Seitenansicht dargestellt. In diesem Fall ist der Stellkörper 30 als ein drehfest und axial nicht verschiebbar auf dem wiederum als eine um die erste Achse A1 drehbare Schraube 34 ausgestalteten Verstellelement 32 befestigter Exzenterkörper 44 ausgeführt. Der Exzenterkörper 44 weist eine wendelförmige Auflagefläche 46 auf, deren Radius in Bezug auf die erste Achse A1 und auf die in Figur 5A gewählte Darstellung von links nach rechts entlang der ersten Achse A1 zunimmt. Der Grundkörper 26 weist einen Auflageabschnitt 48 auf, mit welchem der Exzenterkörper 44 mit der Auflagefläche 46 mit dem Grundkörper 26 in Kontakt steht. Die Schraube 34 ist in eine in das erste Bauteil 12 eingesteckte Gewindehülse 49 eingeschraubt, allerdings ist die Steigung des Gewindes der Gewindehülse 49 an die Steigung der Auflagefläche 46 des Exzenterkörpers 44 angepasst, so dass in diesem Ausführungsbeispiel das Gewinde der Gewindehülse 49 je nach Steigung der Auflagefläche 48 nicht selbsthemmend ausgestaltet werden kann. Je nach Ausgestaltung kann folglich das Gewinde der Gewindehülse 49 nicht die Funktion der Fixiereinrichtung 40 übernehmen. Um dennoch zu verhindern, dass sich die Schraube 34 unkontrolliert dreht, liegt der Exzenterkörper 44 mit seinem von der Gewindehülse 49 weg zeigenden Ende an einem Reibabschnitt 50 an, der vom Grundkörper 26 gebildet wird.

Um das Fugenmaß G einzustellen, wird die Schraube 34 in die eine oder andere Richtung um die erste Achse A1 gedreht. Infolgedessen wird die Schraube 34 weiter in die Gewindehülse 49 hinein oder aus der Gewindehülse 49 heraus entlang der ersten Achse A1 bewegt. Aufgrund des sich ändernden Radius der Auflagefläche 46 wird hierdurch das erste Bauteil 12 zusammen mit der Schraube 34 und dem Exzenterkörper 44 entlang der zweiten Achse A2 vom Grundkörper 26 und vom Träger 24 weg oder zum Grundkörper 26 und zum Träger 24 hin bewegt. Die Steigung des Gewindes der Gewindehülse 49 ist dabei so bemessen, dass der Auflageabschnitt 48 immer auf der Auflagefläche 46 des Exzenterkörpers 44 verbleibt. Wie in Figur 5B gezeigt, weist der Exzenterkörper 44 Erhöhungen 52 auf, welche die Auflagefläche 46 zu ihrem freien Ende hin begrenzen, wodurch der Auflageabschnitt 48 auf der Auflagefläche 46 geführt wird.

Wie bereits erwähnt, liegt der Reibabschnitt 50 des Grundkörpers 26 am von der Gewindehülse 49 weg zeigenden Ende des Exzenterkörpers 44 an. Aufgrund der zwischen dem Reibabschnitt 50 und dem Exzenterkörper 44 wirkenden Reibkraft wird verhindert, dass sich die Schraube 34 unkontrolliert um die erste Achse A1 dreht. Folglich bildet in diesem Ausführungsbeispiel der Reibabschnitt 50 die Fixiereinrichtung 40.

In Figur 6 ist ein fünftes Ausführungsbeispiel der erfindungsgemäßen Vorrichtung 22₅ ebenfalls anhand einer Seitenansicht dargestellt. Der Stellkörper 30 umfasst in diesem Fall zwei Scherenpaare 54, die jeweils zwei Scherenglieder 56 aufweisen. Bezogen auf die in Figur 6 gewählte Darstellung sind die beiden unteren Scherenglieder 56 mit dem Grundkörper 26 der Vorrichtung 22₅ drehbar verbunden, der sich auf dem in Figur 1 gezeigten Träger 24 des Fahrzeugs 16 abstützt. Die beiden oberen Scherenglieder 56 sind drehbar mit einem Auflagekörper 58 verbunden, der am ebenfalls in Figur 1 gezeigten Vorsprung 20 des ersten Bauteils 12 befestigt ist. Alternativ kann der Vorsprung 20 hier nicht dargestellte Befestigungsabschnitte aufweisen, an denen die beiden oberen Scherenglieder 56 befestigt sind. Darüber hinaus sind die Scherenglieder 56 eines Scherenpaares 54 drehbar miteinander verbunden. Sämtliche Drehachsen der Scherenpaare 54 verlaufen parallel und bezogen auf die in Figur 6 gewählte Darstellung senkrecht zur Zeichenebene. Das Verstellelement 32 umfasst in diesem Fall eine Spindel 60, welche die beiden Scherenpaare 54 durchdringt. Weiterhin ist eine Spindelmutter 62 auf die Spindel 60 aufgeschraubt und drehfest mit dem in Figur 6 linken Scherenpaar 54 verbunden.

Zum Einstellen des Fugenmaßes G wird die Spindel 60 in die eine oder andere Richtung um die erste Achse A1 gedreht. Hierdurch wird die Spindelmutter 62 in die eine oder andere Richtung axial entlang der ersten Achse A1 bewegt und überträgt diese Bewegung auf das linke Scherenpaar 54. Wird die Spindel 60 so bewegt, dass sich die Spindelmutter 62 bezogen auf die Figur 6 nach rechts bewegt, so wird der Winkel, den die beiden Scherenglieder 56 miteinander einschließen, vergrößert, wodurch das erste Bauteil 12 entlang der zweiten Achse A2 angehoben wird. Infolgedessen wird das Fugenmaß G verringert. Um zu verhindern, dass sich die Spindel 60 selbst entlang der ersten Achse A1 bewegt, weist diese eine Durchmessererweiterung 63 auf, welche beispielsweise nach Art eines Sicherungsrings ausgeführt werden kann, mit welcher die Spindel 60 am rechten Scherenpaar 54 anliegt. Alternativ zum Sicherungsring kann eine hier nicht dargestellte zweite Spindelmutter 62 vorgesehen sein, die sich bei einer Drehung der Spindel 60 in eine Richtung auf die erste Spindelmutter 62 zu oder von dieser weg bewegt. Eine derartige Bewegung kann beispielsweise dadurch erreicht werden, dass die Spindel 60 zwei Gewindeabschnitte aufweist, von denen der eine Gewindeabschnitt eine positive und der andere Gewindeabschnitt eine negative Steigung aufweist. In jedem Fall weist die Spindel 60 ein selbsthemmendes Gewinde 42 auf, welches in diesem Ausführungsbeispiel die Fixiereinrichtung 40 darstellt und verhindert, dass sich die Spindel 60 unkontrolliert um die eigene Achse A1 drehen kann.

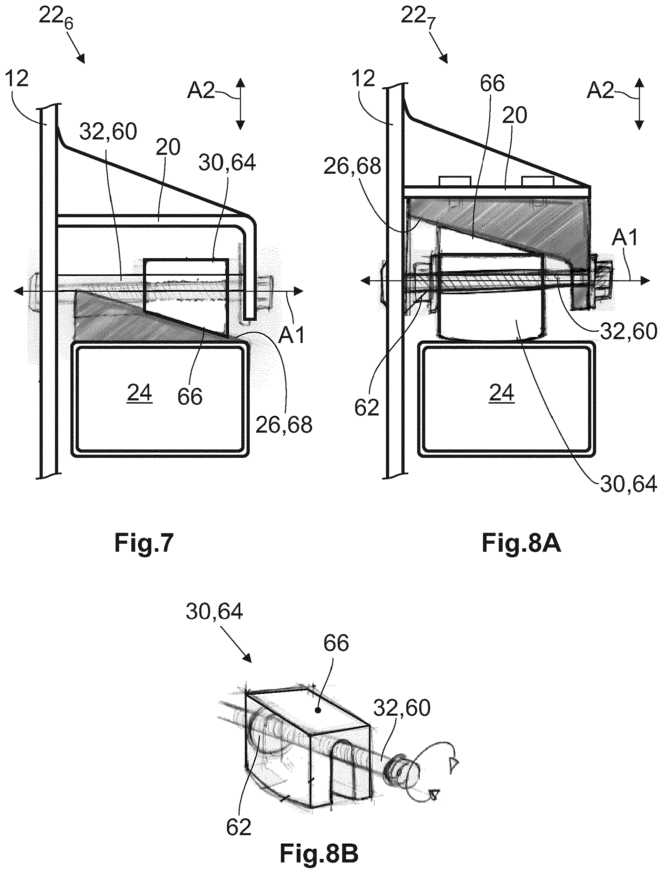

In Figur 7 ist ein sechstes Ausführungsbeispiel der erfindungsgemäßen Vorrichtung 22₆ anhand einer Seitenansicht gezeigt. Die Vorrichtung 22₁ gemäß dem sechsten Ausführungsbeispiel weist eine Spindel 60 und einen auf der Spindel 60 angeordneten Spindelkeil 64 auf. Die Spindel 60 bildet das Verstellelement 32 und der Spindelkeil 64 bildet den Stellkörper 30. Der Spindelkeil 64 ist nach Art einer Spindelmutter 62 ausgebildet, weist allerdings eine geneigte Fläche 66 auf. Mit dieser geneigten Fläche 66 liegt der Spindelkeil 64 auf einem Keilabschnitt 68 des Grundkörpers 26 auf, der korrespondierend zum Spindelkeil 64 ausgebildet ist und insbesondere die gleiche Neigung aufweist. Wird die Spindel 60 um die eigene Achse A1 gedreht, so bewegt sich der Spindelkeil 64 entlang der Drehachse der Spindel 60 bzw. der ersten Achse A1, wodurch das erste Bauteil 12 zusammen mit der Spindel 60 und dem Spindelkeil 64 entlang der zweiten Achse A2 zum zweiten Bauteil 14 hin oder vom zweiten Bauteil 14 weg bewegt wird, wodurch das Fugenmaß G entsprechend verändert wird. Um zu verhindern, dass sich die Spindel 60 beim Drehen selbst entlang der ersten Achse A1 bewegt, ist der Vorsprung 20 L-förmig ausgebildet. Die Spindel 60 liegt bezogen auf die erste Achse A1 einerseits gegen den freien Schenkel des L-förmigen Vorsprungs 20 und andererseits gegen das erste Bauteil 12 an.

In den Figuren 8A ist ein siebtes Ausführungsbeispiel der erfindungsgemäßen Vorrichtung 22₇ anhand einer Seitenansicht gezeigt. Das siebte Ausführungsbeispiel gleicht dabei weitgehend dem in Figur 7 dargestellten sechsten Ausführungsbeispiel, allerdings ist der Grundkörper 26 nicht am Träger 24, sondern am Vorsprung 20 des ersten Bauteils 12 angeordnet. Der Spindelkeil 64, welcher in Figur 8B anhand einer perspektivischen Darstellung separat gezeigt ist, liegt auf dem Träger 24 auf und mit der geneigten Fläche 66 am Keilabschnitt 68 des Grundkörpers 26 an. Im siebten Ausführungsbeispiel der erfindungsgemäßen Vorrichtung 22₇ weist der Spindelkeil 64 kein Gewinde auf, mit welcher er mit der Spindel 60 zusammenwirkt. Die Bewegung des Spindelkeils 64 entlang der ersten Achse A1 wird stattdessen mit der auf die Spindel 60 aufgeschraubten Spindelmutter 62 bewirkt, die drehfest mit dem Spindelkeil 64 verbunden ist. Wird die Spindel 60 gedreht, so wird der Spindelkeil 64 mittels der Spindelmutter 62 nicht nur gegenüber dem Keilabschnitt 68 des Grundkörpers 26, sondern auch gegenüber dem Träger 24 entlang der ersten Achse A1 bewegt. Wie auch im sechsten Ausführungsbeispiel ist die Spindel 60 am ersten Bauteil 12 so befestigt, dass sie sich nicht entlang der ersten Achse A1 verschieben kann. Der Grundkörper 26 ist L-förmig ausgestaltet, so dass die Spindel 60 am freien Schenkel ebenfalls gegen ein Verschieben entlang der ersten Achse A1 gesichert ist.

Aufgrund der Tatsache, dass sowohl im sechsten Ausführungsbeispiel als auch im siebten Ausführungsbeispiel der erfindungsgemäßen Vorrichtung 22₆, 22₇ der Spindelkeil 64 mit dem Keilabschnitt 68 des Grundkörpers 26 in Kontakt steht, wirkt zwischen dem Spindelkeil 64 und dem Keilabschnitt 68 eine entsprechend hohe Reibkraft, welche verhindert, dass sich der Spindelkeil 64 unkontrolliert relativ zum Keilabschnitt 68 bewegen kann. Folglich wirkt der Spindelkeil 64 bei der Vorrichtung 22₆, 22₇ gemäß dem sechsten und dem siebten Ausführungsbeispiel als die Fixiereinrichtung 40. Bei dem siebten Ausführungsbeispiel wirkt eine Reibkraft zusätzlich noch zwischen dem Spindelkeil 64 und dem Träger 24, so dass die einmal eingestellte Position des Verstellelements 32 und des Stellkörpers 30, in diesem Fall des Spindelkeils 64, zusätzlich fixiert wird.

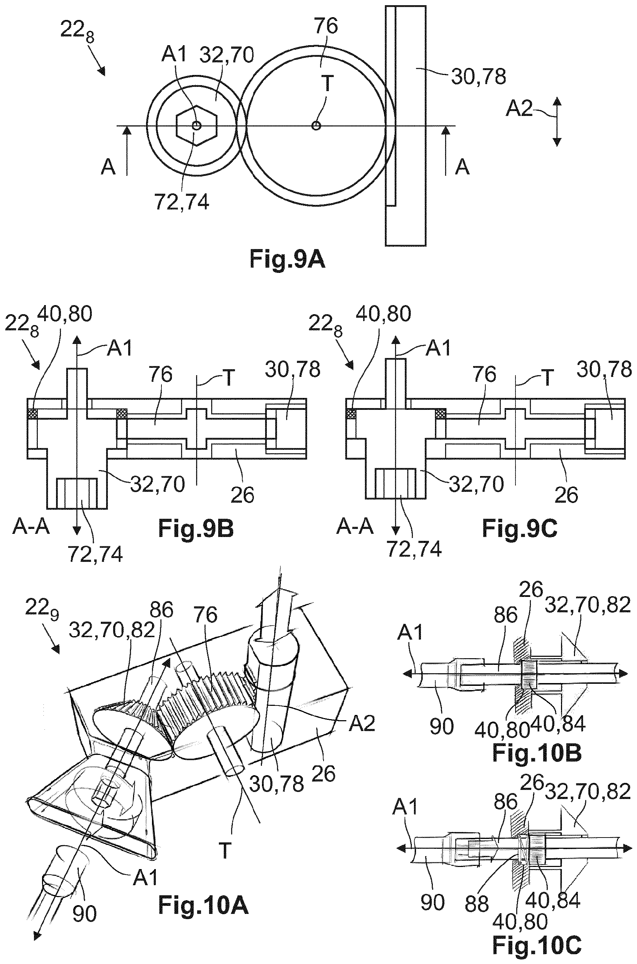

In den Figuren 9A, 9B und 9C ist ein achtes Ausführungsbeispiel der erfindungsgemäßen Vorrichtung 22₈ anhand einer prinzipiellen Seitenansicht dargestellt. Das Verstellelement 32 ist in diesem Fall als ein Zahnrad 70 ausgebildet, welches einen im dargestellten Ausführungsbeispiel als Sechskant 72 ausgeführten Eingriffsabschnitt 74 aufweist, in welchen ein entsprechend geformtes Werkzeug eingebracht werden kann. Mit diesem Werkzeug kann das Zahnrad 70 um die senkrecht zur Zeichenebene der Figur 9A verlaufende erste Achse A1 gedreht werden. Das Zahnrad 70 steht in kämmendem Eingriff mit einem Zwischenzahnrad 76, welches um eine parallel zur ersten Achse A1 des ersten Zahnrads 70 verlaufende weitere Drehachse T gedreht werden kann. Das weitere Zahnrad 70 steht in kämmendem Eingriff mit einer Zahnstange 78, welche senkrecht zu der ersten Achse A1 und der weiteren Drehachse T entlang der zweiten Achse A2 axial bewegbar ist. Die Zahnstange 78 ist mit dem hier nicht dargestellten ersten Bauteil 12 verbunden, so dass eine Drehung des Zahnrads 70 um die erste Achse A1 eine Bewegung des ersten Bauteils 12 zum zweiten Bauteil 14 in oder vom zweiten Bauteil 14 weg bewirkt.

In den Figuren 9B und 9C ist die Vorrichtung 22₈ entlang der in Figur 9A dargestellten Schnittebene A-A gezeigt. In der Figur 9B ist das Zahnrad 70 in einer Offenstellung dargestellt, in welcher die Drehung des Zahnrads 70 um die erste Achse A1 möglich ist, in Figur 9C ist das Zahnrad 70 in einer Sperrstellung gezeigt, in welcher die Drehung des Zahnrads 70 gesperrt ist. Um zwischen der Offenstellung und der Sperrstellung bewegt zu werden, ist das Zahnrad 70 axial bewegbar entlang der ersten Achse A1 im Grundkörper 26 gelagert. Sowohl in der Offenstellung als auch in der Sperrstellung bleibt das Zahnrad 70 mit dem Zwischenzahnrad 76 in kämmendem Eingriff. Der Grundkörper 26 weist einen Sperrabschnitt 80 auf, welcher zum Zahnrad 70 korrespondierend ausgebildet ist. In der Sperrstellung greift das Zahnrad 70 formschlüssig in den Sperrabschnitt 80 ein, wodurch die Drehung des Zahnrads 70 um die eigene Drehachse bzw. um die erste Achse A1 verhindert wird. Das erste Bauteil 12 lässt sich entlang der zweiten Achse A2 nicht zum zweiten Bauteil 14 hin oder vom zweiten Bauteil 14 weg bewegen, wenn sich das Zahnrad 70 in der Sperrstellung befindet. Folglich ist in diesem Ausführungsbeispiel die Fixiereinrichtung 40 in Form des Sperrabschnitts 80 ausgebildet.

In den Figuren 10A bis 10C ist ein neuntes Ausführungsbeispiel der erfindungsgemäßen Vorrichtung 22₉ anhand von verschiedenen Ansichten gezeigt. Der grundsätzliche Aufbau der Vorrichtung 22₉ gemäß dem neunten Ausführungsbeispiel entspricht dabei dem Aufbau der Vorrichtung 22₈ gemäß dem achten Ausführungsbeispiel, allerdings ist das Zahnrad 70 in diesem Fall als ein Kegelrad 82 ausgebildet. Folglich verlaufen die erste Achse A1 und die weitere Drehachse T nicht parallel zueinander, sondern schließen einen Winkel ein. Wie aus den Figuren 10B und 10C zu erkennen, ist die Fixiereinrichtung 40 etwas anders aufgebaut. Aufgrund der Tatsache, dass das Zahnrad 70 als Kegelrad 82 ausgebildet ist, kann es nicht entlang der ersten Achse A1 axial bewegt werden, ohne den Eingriff mit dem Zwischenzahnrad 76 zu verlieren. Im neunten Ausführungsbeispiel weist die Fixiereinrichtung 40 ein Sperrelement 84 auf, welches axial auf einer drehfest mit dem Kegelrad 82 verbundenen Lagerachse 86 verschiebbar, aber drehfest mit der Lagerachse 86 verbunden ist. Das Sperrelement 84 ist in diesem Fall mittels einer Feder 88 in einer Sperrstellung vorgespannt. Das Sperrelement 84 kann nach Art eines Zahnrads 70 ausgebildet sein, kann aber auch einen polygonalen Querschnitt aufweisen. In der Sperrstellung greift das Sperrelement 84 formschlüssig in einen korrespondierenden Sperrabschnitt 80 des Grundkörpers 26 ein, so dass das Sperrelement 84 und folglich das Zahnrad 70 nicht um die erste Achse A1 gedreht werden kann. Infolgedessen kann auf das erste Bauteil 12 nicht entlang der zweiten Achse A2 zum zweiten Bauteil 14 hin oder von diesem weg bewegt werden.

Wie aus den Figuren 10B und 10C hervorgeht, kann das Sperrelement 84 gegen die von der Feder 88 aufgebrachte Federkraft mittels eines Schraubenschlüssels 90 in die Offenstellung bewegt werden, in welcher das Zahnrad 70 gedreht und folglich das erste Bauteil 12 zum zweiten Bauteil 14 hin oder von diesem weg bewegt werden kann. Ist das Fugenmaß G eingestellt, muss der Schraubenschlüssel 90 nur noch aus dem Zahnrad 70 herausgezogen, wodurch das Zahnrad 70 von der Feder 88 wieder in die Sperrstellung gestellt wird. Hierdurch wird das einmal eingestellte Fugenmaß G fixiert.

### Bezugszeichenliste

- 10: Personen -und/oder Gütertransportmittel
- 12: erstes Bauteil
- 14: zweites Bauteil
- 16: Fahrzeug
- 18: Fuge

- 20: Vorsprung
- 22, 22₁ - 22₉: Vorrichtung
- 24: Träger
- 26: Grundkörper
- 28: Ausleger

- 30: Stellkörper
- 32: Verstellelement
- 34: Schraube
- 35: Schraubenkopf
- 36: Gewindebohrung
- 37: erste Kontaktfläche
- 38: Durchgangsbohrung
- 39: zweite Kontaktfläche

- 40: Fixiereinrichtung
- 41: erster Schenkel
- 42: Gewinde
- 43: zweiter Schenkel
- 44: Exzenterkörper
- 46: Auflagefläche
- 48: Auflageabschnitt
- 49: Gewindehülse

- 50: Reibabschnitt
- 52: Erhöhung
- 54: Scherenpaar
- 56: Scherenglied
- 58: Auflagekörper

- 60: Spindel
- 62: Spindelmutter
- 63: Durchmessererweiterung
- 64: Spindelkeil
- 66: geneigte Fläche
- 68: Keilabschnitt

- 70: Zahnrad
- 72: Sechskant
- 74: Eingriffsabschnitt
- 76: Zwischenzahnrad
- 78: Zahnstange

- 80: Sperrabschnitt
- 82: Kegelrad
- 84: Sperrelement
- 86: Lagerachse
- 88: Feder

- 90: Schraubenschlüssel

- A1: erste Achse
- A2: zweite Achse
- B: Befestigungspunkt
- G: Fugenmaß
- D: Drehpunkt
- T: weitere Drehachse

## Patentansprüche

1. Vorrichtung zum Verstellen eines ersten Bauteil (12) und eines zweiten Bauteils (14) eines Personen- und/oder Gütertransportmittels (10) relativ zueinander, wobei die beiden Bauteile (12, 14) unter Ausbildung einer Fuge (18) benachbart zueinander angeordnet sind, umfassend
- einen Grundkörper (26),
- ein entlang einer ersten Achse (A1) und/oder um die erste Achse bewegbar im Grundkörper (26) gelagertes Verstellelement (32),
- einen entlang einer zweiten Achse (A2) bewegbar im Grundkörper (26) gelagerten Stellkörper (30), der derart mit dem Verstellelement (32) zusammenwirkt, dass die Bewegung des Verstellelements (32) entlang der ersten Achse (A1) oder um die erste Achse (A1) in eine Bewegung des Stellkörpers (30) und/oder des Verstellelements (32) entlang der zweiten Achse (A2) umgewandelt wird, wobei die Bewegung des Stellkörpers (30) und/oder des Verstellelements (32) entlang der zweiten Achse (A2) auf das erste Bauteil (12) oder das zweite Bauteil (14) übertragbar ist, und
- eine Fixiereinrichtung (40) zum Fixieren des Verstellelements (32) und des Stellkörpers (30) in einer wählbaren Position, wobei
- das Verstellelement (32) als eine Schraube (34) ausgebildet ist,
**dadurch gekennzeichnet, dass** die Fixiereinrichtung (40) als ein selbsthemmendes Gewinde (42) der Schraube (34) mit einem Schraubenkopf (35) ausgebildet ist.

2. Vorrichtung nach Anspruch 1,
**dadurch gekennzeichnet, dass** der Stellkörper (30), insbesondere über einen Ausleger (28), um einen Drehpunkt (D) drehbar im Grundkörper (26) gelagert ist, insbesondere um einen senkrecht zur ersten Achse (A1) und zur zweiten Achse (A2) gerichteten Drehpunkt (D),
und wobei der Stellkörper (30) eine erste Kontaktfläche (37) zur Beaufschlagung durch den Schraubenkopf (35) der Schraube (34) aufweist, die im Wesentlichen senkrecht zur ersten Achse (A1) ausgerichtet ist,
und wobei der Stellkörper (30) eine zweite Kontaktfläche (39) zur Kontaktierung des ersten Bauteils (12) oder des zweiten Bauteils (14) aufweist, die im Wesentlichen senkrecht zur zweiten Achse (A2) ausgerichtet ist.

3. Vorrichtung nach Anspruch 2,
**dadurch gekennzeichnet, dass** der Stellkörper (30) zumindest zwei, insbesondere einen in etwa L-förmigen Stellkörper (30) bildende, Schenkel (41, 43) aufweist, die zueinander im Bereich von 45° bis 135°, insbesondere in etwa 90° abgewinkelt sind, wobei der Drehpunkt (D) im Verbindungspunkt der beiden Schenkel (41,43) angeordnet ist und wobei die erste Kontaktfläche (37) an dem einen Schenkel (41) und die zweite Kontaktfläche (39) an dem anderen Schenkel (43) ausgebildet ist.

4. Vorrichtung nach einem der Ansprüche 2 oder 3,
**dadurch gekennzeichnet, dass** mindestens eine, bevorzugt beide der ersten und zweiten Kontaktflächen (37, 39) konvex gewölbt sind, womit bewirkt wird, dass auch in verschiedenen Drehpositionen um den Drehpunkt (D) die jeweilige Kontaktfläche (41, 43) im Wesentlichen senkrecht zur ersten Achse (A1) oder zweiten Achse (A2) ausgerichtet ist.

5. Vorrichtung nach einem der Ansprüche 2 Z bis 4,
**dadurch gekennzeichnet, dass** die erste Kontaktfläche (37) in einem anderen, insbesondere geringerem, Abstand zum Drehpunkt (D) angeordnet ist als die zweite Kontaktfläche (39) .

6. Vorrichtung zum Verstellen eines ersten Bauteil (12) und eines zweiten Bauteils (14) eines Personen- und/oder Gütertransportmittels (10) relativ zueinander, wobei die beiden Bauteile (12, 14) unter Ausbildung einer Fuge (18) benachbart zueinander angeordnet sind, umfassend
- einen Grundkörper (26),
- ein entlang einer ersten Achse (A1) und/oder um die erste Achse bewegbar im Grundkörper (26) gelagertes Verstellelement (32),
- einen entlang einer zweiten Achse (A2) bewegbar Z im Grundkörper (26) gelagerten Stellkörper (30), der derart mit dem Verstellelement (32) zusammenwirkt, dass die Bewegung des Verstellelements (32) entlang der ersten Achse (A1) oder um die erste Achse (A1) in eine Bewegung des Stellkörpers (30) und/oder des Verstellelements (32) entlang der zweiten Achse (A2) umgewandelt wird, wobei die Bewegung des Stellkörpers (30) und/oder des Verstellelements (32) entlang der zweiten Achse (A2) auf das erste Bauteil (12) oder das zweite Bauteil (14) übertragbar ist, und
- eine Fixiereinrichtung (40) zum Fixieren des Verstellelements (32) und des Stellkörpers (30) in einer wählbaren Position,
**dadurch gekennzeichnet, dass** das Verstellelement (32) als eine Schraube (34) ausgebildet ist, wobei der Stellkörper (30) als ein auf der Schraube (34) angeordneter Exzenterkörper (44) ausgebildet ist.

7. Vorrichtung nach Anspruch 6,
**dadurch gekennzeichnet, dass** der Exzenterkörper (44) eine wendelförmige Auflagefläche (46) mit einem sich in Bezug auf die erste Achse (A1) ändernden Radius aufweist, wobei sich der Exzenterkörper (44) auf einem Auflageabschnitt (48) des Grundkörpers (26) abstützt.

8. Vorrichtung nach einem der Ansprüche 6 oder 7,
**dadurch gekennzeichnet, dass** die Fixiereinrichtung (40) einen am Grundkörper (26) angeordneten und mit dem Exzenterkörper (44) zusammenwirkenden Reibabschnitt (50) umfasst.

9. Vorrichtung zum Verstellen eines ersten Bauteil (12) und eines zweiten Bauteils (14) eines Personen- und/oder Gütertransportmittels (10) relativ zueinander, wobei die beiden Bauteile (12, 14) unter Ausbildung einer Fuge (18) benachbart zueinander angeordnet sind, umfassend
- einen Grundkörper (26),
- ein entlang einer ersten Achse (A1) und/oder um die erste Achse bewegbar im Grundkörper (26) gelagertes Verstellelement (32),
- einen entlang einer zweiten Achse (A2) bewegbar im Grundkörper (26) gelagerten Stellkörper (30), der derart mit dem Verstellelement (32) zusammenwirkt, dass die Bewegung des Verstellelements (32) entlang der ersten Achse (A1) oder um die erste Achse (A1) in eine Bewegung des Stellkörpers (30) und/oder des Verstellelements (32) entlang der zweiten Achse (A2) umgewandelt wird, wobei die Bewegung des Stellkörpers (30) und/oder des Verstellelements (32) entlang der zweiten Achse (A2) auf das erste Bauteil (12) oder das zweite Bauteil (14) übertragbar ist, und
- eine Fixiereinrichtung (40) zum Fixieren des Verstellelements (32) und des Stellkörpers (30) in einer wählbaren Position,
**dadurch gekennzeichnet, dass** das Verstellelement (32) eine Spindel (60) und der Stellkörper (30) eine auf der Spindel (60) angeordnete Spindelmutter (62) und ein Scherenpaar (54) mit zwei Scherengliedern (56) umfasst, wobei die Spindelmutter (62) drehfest mit dem Scherenpaar (54) befestigt ist, wobei
das erste der Scherenglieder (56) drehbar am Grundkörper (26) und das andere der Scherenglieder (56) drehfest mit einem Auflagekörper (58) befestigt ist, auf welchem das erste Bauteil (12) oder das zweite Bauteil (14) auflegbar ist, oder
das erste der Scherenglieder (56) drehbar am Grundkörper (26) befestigt und das andere der Scherenglieder (56) drehfest am ersten Bauteil (12) oder dem zweiten Bauteil (14) befestigbar ist.

10. Vorrichtung zum Verstellen eines ersten Bauteil (12) und eines zweiten Bauteils (14) eines Personenund/oder Gütertransportmittels (10) relativ zueinander, wobei die beiden Bauteile (12, 14) unter Ausbildung einer Fuge (18) benachbart zueinander angeordnet sind, umfassend
- einen Grundkörper (26),
- ein entlang einer ersten Achse (A1) und/oder um die erste Achse bewegbar im Grundkörper (26) gelagertes Verstellelement (32),
- einen entlang einer zweiten Achse (A2) bewegbar im Grundkörper (26) gelagerten Stellkörper (30), der derart mit dem Verstellelement (32) zusammenwirkt, dass die Bewegung des Verstellelements (32) entlang der ersten Achse (A1) oder um die erste Achse (A1) in eine Bewegung des Stellkörpers (30) und/oder des Verstellelements (32) entlang der zweiten Achse (A2) umgewandelt wird, wobei die Bewegung des Stellkörpers (30) und/oder des Verstellelements (32) entlang der zweiten Achse (A2) auf das erste Bauteil (12) oder das zweite Bauteil (14) übertragbar ist, und
- eine Fixiereinrichtung (40) zum Fixieren des Verstellelements (32) und des Stellkörpers (30) in einer wählbaren Position,
**dadurch gekennzeichnet, dass** das Verstellelement (32) als ein drehbar im Grundkörper (26) gelagertes Zahnrad (70) ausgebildet ist, welches mit dem als eine entlang der zweiten Achse (A2) beweglichen Zahnstange (78) ausgebildeten Stellkörper (30) in kämmenden Eingriff steht, und zwischen dem Zahnrad (70) und der Zahnstange (78) ein drehbar im Grundkörper (26) gelagertes Zwischenzahnrad (76) angeordnet ist.

11. Vorrichtung nach Anspruch 10,
**dadurch gekennzeichnet, dass** die Fixiereinrichtung (40) ein mit dem Verstellelement (32) drehfest und axial auf dem Verstellelement (32) verschiebbares Sperrelement (84) aufweist, wobei das Sperrelement (84) zwischen einer Sperrstellung, in welcher das Sperrelement (84) die Drehung des Verstellelements (32) um die erste Achse (A1) sperrt, und einer Offenstellung, in welcher das Sperrelement (84) die Drehung des Verstellelements (32) ermöglicht, axial verschiebbar ist.

12. Vorrichtung nach einem der Ansprüche 10 oder 11,
**dadurch gekennzeichnet, dass** das Zahnrad (70) als ein Kegelrad (82) ausgebildet ist.

13. Vorrichtung nach Anspruch 12,
**dadurch gekennzeichnet, dass** das Zahnrad (70) axial verschiebbar im Grundkörper (26) gelagert ist, wobei das Zahnrad (70) zwischen einer Sperrstellung, in welcher die Drehung des Verstellelements (32) um die erste Achse (A1) gesperrt ist, und einer Offenstellung, in welcher die Drehung des Verstellelements (32) möglich ist, axial verschiebbar ist.

14. Vorrichtung nach einem der Ansprüche 10 oder 11,
**dadurch gekennzeichnet, dass** der Grundkörper (26) einen zum Zahnrad (70) korrespondierenden Sperrabschnitt (80) aufweist, in welchen das Zahnrad (70) in der Sperrstellung formschlüssig eingreift.

15. Personen- und/oder Gütertransportmittel, umfassend
- ein erstes Bauteil (12) und ein zweites Bauteil (14), wobei die beiden Bauteile (12, 14) unter Ausbildung einer Fuge (18) benachbart zueinander angeordnet sind, und
- eine Vorrichtung (22) nach einem der vorherigen Ansprüche, wobei das erste Bauteil (12) und das zweite Bauteil (14) mittels der Vorrichtung (22) relativ zueinander verstellbar sind, wodurch das Fugenmaß (G) der Fuge (18) veränderbar ist.

## Claims

1. Device for adjusting a first component (12) and a second component (14) of a means of passenger and/or freight transportation (10) relative to each other, wherein the two components (12, 14) are arranged adjacent to each other, forming a joint (18), comprising
- a main body (26),
- an adjusting element (32), movably mounted in the main body (26) along a first axis (A1) and/or around the first axis (A1),
- a positioning element (30), movably mounted in the main body (26) along a second axis (A1), which interacts with the adjusting element (32) such that the movement of the adjusting element (32) along the first axis (A1) or around the first axis (A1) is transformed into a movement of the positioning element (30) or of the adjusting element (32) along the second axis (A2), wherein the movement of the positioning element (30) and/or of the adjusting element (32) along the second axis (A2) can be transmitted to the first component (12) or the second component (14), and
- a fixing device (40) for fixing the adjusting element (32) and the positioning element (30) in a selectable position, wherein
- the adjusting element (32) is implemented as a screw (34),
**characterized in that** the fixing device (40) is implemented as a self-locking thread (42)
of the screw (34) with a screw head (35).

2. Device in accordance with claim 1,
**characterized in that** the positioning element (30) is rotatably mounted around a center of rotation (D) in the main body (26), in particular by means of a cantilever (28), in particular around a center of rotation (D) directed vertically to the first axis (A1) and to the second axis (A2),
and wherein the positioning element (30) comprises a first contact surface (37), for loading by means of the screw head (35) of the screw (34), which is aligned essentially vertically to the first axis (A1),
and wherein the positioning element (30) comprises a second contact surface (39), for connecting the first component (12) or the second component (14), which is aligned essentially vertically to the second axis (A2).

3. Device in accordance with claim 2,
**characterized in that** the positioning element (30) comprises at least two, in particular one approximately L-shaped, limbs (41, 43) forming the positioning element (30), which are arranged at an angle to each other in the range of approximately 45° to 135°, in particular approximately 90°, wherein the center of rotation (D) is disposed at the point of connection of the two limbs (41, 43), and wherein the first contact surface (37) is implemented on the one limb (41) and the second contact surface (39) is implemented on the other limb (43).

4. Device in accordance with claim 2 or 3,
**characterized in that** at least one, preferably both, of the first and second contact surfaces (37, 39) are convexly curved, by means of which it is achieved that, also in various positions of rotation around the center of rotation (D), each of the contact surfaces (37, 39) is essentially vertically aligned with the first axis (A1) or the second axis (A2).

5. Device in accordance with any of claims 2 to 4,
**characterized in that** the first contact surface (37) is arranged at a different, in particular shorter distance to the center of rotation (D) than the second contact surface (39) .

6. Device for adjusting a first component (12) and a second component (14) of a means of passenger and/or freight transportation (10) relative to each other, wherein the two components (12, 14) are arranged adjacent to each other, forming a joint (18), comprising
- a main body (26),
- an adjusting element (32), movably mounted in the main body (26) along a first axis (A1) and/or around the first axis (A1),
- a positioning element (30), movably mounted in the main body (26) along a second axis (A1), which interacts with the adjusting element (32) such that the movement of the adjusting element (32) along the first axis (A1) or around the first axis (A1) is transformed into a movement of the positioning element (30) or of the adjusting element (32) along the second axis (A2), wherein the movement of the positioning element (30) and/or of the adjusting element (32) along the second axis (A2) can be transmitted to the first component (12) or the second component (14), and
- a fixing device (40) for fixing the adjusting element (32) and the positioning element (30) in a selectable position,
**characterized in that** the adjusting element (32) is implemented as a screw (34),
wherein the adjusting element (32) is implemented as an eccentric body (44) arranged
on the screw.

7. Device in accordance with claim 6,
**characterized in that** the eccentric body (44) comprises a helically shaped support surface (46) with a radius that changes in relation to the first axis (A1), wherein the eccentric body (44) is supported on a support segment (48) of the main body (26).

8. Device in accordance with either of claims 6 or 7, **characterized in that** the fixing device (40) includes a cutting section (50) arranged on the main body (26) and which interacts with the eccentric body (44).

9. Device for adjusting a first component (12) and a second component (14) of a means of passenger and/or freight transportation (10) relative to each other, wherein the two components (12, 14) are arranged adjacent to each other, forming a joint (18), comprising
- a main body (26),
- an adjusting element (32), movably mounted in the main body (26) along a first axis (A1) and/or around the first axis (A1),
- a positioning element (30), movably mounted in the main body (26) along a second axis (A1), which interacts with the adjusting element (32) such that the movement of the adjusting element (32) along the first axis (A1) or around the first axis (A1) is transformed into a movement of the positioning element (30) or of the adjusting element (32) along the second axis (A2), wherein the movement of the positioning element (30) and/or of the adjusting element (32) along the second axis (A2) can be transmitted to the first component (12) or the second component (14), and
- a fixing device (40) for fixing the adjusting element (32) and the positioning element (30) in a selectable position,
**characterized in that** the adjusting element (32) includes a spindle (60) and **in that** the positioning element (30) includes a spindle nut (62) arranged on the spindle (60) and a scissored pair with two scissor elements (56), wherein the spindle nut (62) is non-rotatably attached to the scissored pair (54), wherein
the first of the scissor elements (56) is rotatably attached to the main body (26) and the other scissor element (56) is non-rotatably attached to a support body (58), on which the first component (12) or the second component (14) can rest, or
the first of the scissor elements (56) is rotatably attached to the main body (26) and the other scissor element (56) is non-rotatably attachable to the first component (12) or to the second component (14).

10. Device for adjusting a first component (12) and a second component (14) of a means of passenger and/or freight transportation (10) relative to each other, wherein the two components (12, 14) are arranged adjacent to each other, forming a joint (18),
comprising
- a main body (26),
- an adjusting element (32), movably mounted in the main body (26) along a first axis (A1) and/or around the first axis (A1),
- a positioning element (30), movably mounted in the main body (26) along a second axis (A1), which interacts with the adjusting element (32) such that the movement of the adjusting element (32) along the first axis (A1) or around the first axis (A1) is transformed into a movement of the positioning element (30) or of the adjusting element (32) along the second axis (A2), wherein the movement of the positioning element (30) and/or of the adjusting element (32) along the second axis (A2) can be transmitted to the first component (12) or the second component (14), and
- a fixing device (40) for fixing the adjusting element (32) and the positioning element (30) in a selectable position,
**characterized in that** the adjusting element (32) is implemented as a gear wheel (70) which is rotatably mounted in the main body (26) and which is in meshing engagement with the positioning element (30), implemented as a gear rack (78) which is movable along the second axis (A2), and **in that** an intermediate gear wheel (76) is rotatably mounted in the main body (26) between the gear wheel (70) and the gear rack (78).

11. Device in accordance with claim 10,
**characterized in that** the fixing device (40) comprises a locking element (84), non-rotatably connected to the adjusting element (32) and axially movable on the adjusting element (32), wherein the locking element (84) is axially movable between a locked position, in which the locking element (84) blocks the rotation of the adjusting element (32) around the first axis (A1) and an open position, in which the locking element (84) allows the rotation of the adjusting element (32).

12. Device in accordance with either of the claims 10 or 11, **characterized in that** the gear wheel (70) is implemented as a bevel gear (82).

13. Device in accordance with claim 12,
**characterized in that** the gear wheel (70) is axially movably mounted in the main body (26), wherein the gear wheel (70) is axially movable between a locked position, in which the rotation of the adjusting element (32) around the first axis (A1) is blocked, and an open position, in which the the rotation of the adjusting element (32) is allowed.

14. Device in accordance with either of the claims 10 or 11, **characterized in that** the main body (26) comprises a locking segment (80) with which the gear wheel (70) positively engages in the locked position.

15. Passenger and/or freight transportation means, comprising
- a first component (12) and a second component (14), wherein the two components (12, 14) are arranged adjacent to each other, forming a joint (18),
- a device (22) in accordance with any of the preceding claims, wherein the first component (12) and the second component (14) can be adjusted relative to each other by means of the device (22), by means of which the joint dimensions (G) of the joint (18) can be changed.

## Revendications

1. Dispositif de réglage l'un par rapport à l'autre, d'un premier composant (12) et d'un second composant (14) d'un moyen de transport de personnes et/ou de marchandises (10), les deux composants (12, 14) étant installés au voisinage l'un de l'autre en laissant un intervalle (18), dispositif comprenant :
- une base (26),
- un élément de réglage (32) monté dans la base (26), mobile le long et/ou autour d'un premier axe (A1),
- un organe réglable (30) monté mobile le long d'un second axe (A2) dans le corps de base (26), cet organe réglable coopérant avec l'élément de réglage (32) pour que le mouvement de l'élément de réglage (32) le long du premier axe (A1) ou autour du premier axe (A1) se transforme en un mouvement de l'organe réglable (30) et/ou de l'élément de réglage (32) le long du second axe (A2) le mouvement de l'organe de réglage (30) et/ou de l'élément de réglage (32) le long du deuxième axe (A2) se transmettant au premier composant (12) ou au second composant (14), et
- une installation de fixation (40) pour fixer l'élément réglable (32) et l'organe de réglage (30) dans une position sélectionnée,
- l'élément de réglage (32) étant sous la forme d'une vis (34),
dispositif **caractérisé en ce que**
l'installation de fixation (40) est sous la forme d'un filetage (42) autobloquant de la vis (34) avec une tête de vis (35).

2. Dispositif selon la revendication 1,
**caractérisé en ce que**
l'organe réglable (30) est monté à rotation dans la base (26) autour d'un point de rotation (D) en particulier par un bras (28), notamment autour d'un point de rotation (D) perpendiculaire au premier axe (A1) et au second axe (A2), et
- l'organe réglable (30) ayant une première surface de contact (37) pour être sollicitée par la tête (35) de la vis (34), cette surface étant pratiquement perpendiculaire au premier axe (A1), et
- l'organe réglable (30) a une seconde surface de contact (39) pour venir en contact avec le premier composant (12) ou le second composant (14), cette surface étant pratiquement perpendiculaire au second axe (A2).

3. Dispositif selon la revendication 2,
**caractérisé en ce que**
l'organe réglable (30) comporte au moins deux branches (41, 43) formant notamment un organe réglable (30) sensiblement en forme de L, les branches étant repliées l'une par rapport à l'autre dans une plage comprise entre 45° et 135°, notamment d'environ 90°,
le point de rotation (D) associé au point de jonction des deux branches (41, 43) et la première surface de contact (37) est réalisée sur une branche (41) et la seconde surface de contact (39) est réalisée sur l'autre branche (43).

4. Dispositif selon l'une des revendications 2 ou 3, **caractérisé en ce que**
au moins l'une et de préférence les deux première et seconde surfaces de contact (37, 39) sont bombées de forme convexe, de façon que même dans différentes positions de rotation autour du point de rotation (D), les surfaces de contact (41, 43) respectives restent essentiellement perpendiculaires au premier axe (A1) ou au second axe (A2).

5. Dispositif selon l'une des revendications 2 à 4, **caractérisé en ce que**
la première surface de contact (37) est à une autre distance par rapport au point de rotation (D) notamment plus faible que celle de la seconde surface de contact (39).

6. Dispositif de réglage l'un par rapport à l'autre d'un premier composant (12) et d'un second composant (14) d'un moyen de transport de personnes et/ou de marchandises (10) les deux composants (12, 14) étant voisins l'un à l'autre en laissant un intervalle (18),
dispositif comprenant :
- une base (26),
- un élément de réglage (32) monté mobile le long d'un premier axe (A1) et/ou autour d'un premier axe dans la base (26),
- un organe réglable (30) monté mobile dans la base (26) le long d'un second axe (A2), cet organe réglable coopérant avec l'élément de réglage (32) pour que le mouvement de l'élément de réglage (32) le long du premier axe (A1) ou autour du premier axe (A1) se traduise par un mouvement de l'organe réglable (30) et/ou de l'élément de réglage (32) le long du second axe (A2), le mouvement de l'organe réglable (30) et/ou l'élément de réglage (32) le long du second axe (A2) étant transmis au premier composant (12) ou au second composant (14), et
- une installation de fixation (40) est prévue pour fixer l'élément de réglage (32) et l'organe réglable (30) dans une position choisie,
dispositif **caractérisé en ce que**
l'élément de réglage (32) est sous la forme d'une vis (34), l'organe réglable (30) étant réalisé sous la forme d'un excentrique (44) coopérant avec la vis (34).

7. Dispositif selon l'une la revendication 6,
**caractérisé en ce que**
l'excentrique (44) a une surface d'appui (46) hélicoïdale, à rayon variable par rapport au premier axe (A1), l'excentrique (44) s'appuyant sur un segment d'appui (48) de la base (26).

8. Dispositif selon l'une des revendications 6 ou 7, **caractérisé en ce que**
l'installation de fixation (40) comprend un segment de friction (50) prévu sur la base (26) et coopérant avec l'excentrique (44).

9. Dispositif de réglage l'un par rapport à l'autre d'un premier composant (12) et d'un second composant (14) d'un moyen de transport de personnes et/ou de marchandises (10) les composants (12, 14) étant installés au voisinage l'un de l'autre en laissant un intervalle (18), comprenant :
- une base (26),
- un élément de réglage (32) monté dans la base (26), mobile le long et/ou autour d'un premier axe (A1),
- un organe réglable (30) monté mobile le long d'un second axe (A2) dans le corps de base (26), cet organe réglable coopérant avec l'élément de réglage (32) pour que le mouvement de l'élément de réglage (32) le long ou autour du premier axe (A1) se transforme en un mouvement de l'organe réglable (30) et/ou de l'élément de réglage (32) le long du second axe (A2), le mouvement de l'organe de réglage (30) et/ou de l'élément de réglage (32) le long du deuxième axe (A2) se transmettant au premier composant (12) ou au second composant (14), et
- une installation de fixation (40) pour fixer l'élément réglable (32) et l'organe de réglage (30) dans une position sélectionnée,
**caractérisé en ce que**
l'élément de réglage (32) comprend une broche (60) et l'organe réglable (30) comprend un écrou (62) installé sur la broche (60) et une paire de ciseaux (54) avec deux éléments de ciseaux (56), l'écrou (62) étant fixé solidairement en rotation à la paire de ciseaux (54),
le premier des éléments de ciseaux (56) étant fixé à rotation à la base (26) et l'autre des éléments de ciseaux (56) étant fixé solidairement en rotation à un organe d'appui (58) recevant le premier composant (12) ou le second composant (14), ou
le premier élément de ciseaux (56) est fixé à rotation à la base (26) et l'autre élément de ciseaux (56) est fixé solidairement en rotation au premier composant (12) ou au second composant (14).

10. Dispositif de réglage l'un par rapport à l'autre d'un premier composant (12) et d'un second composant (14) d'un moyen de transport de personnes et/ou de marchandises (10), les deux composants (12, 14) étant installés au voisinage l'un de l'autre en laissant un intervalle (18), dispositif comprenant :
- une base (26),
- un élément de réglage (32) monté dans la base (26), mobile le long et/ou autour d'un premier axe (A1),
- un organe réglable (30) monté mobile le long d'un second axe (A2) dans le corps de base (26), cet organe réglable coopérant avec l'élément de réglage (32) pour que le mouvement de l'élément de réglage (32) le long ou autour du premier axe (A1) se transforme en un mouvement de l'organe réglable (30) et/ou de l'élément de réglage (32) le long du second axe (A2) le mouvement de l'organe de réglage (30) et/ou de l'élément de réglage (32) le long du deuxième axe (A2) se transmettant au premier composant (12) ou au second composant (14), et
- une installation de fixation (40) pour fixer l'élément réglable (32) et l'organe de réglage (30) dans une position sélectionnée,
dispositif **caractérisé en ce que**
l'élément de réglage (32) est un pignon denté (70) monté à rotation dans la base (26) et en prise avec un organe réglable (30) en forme de crémaillère (78) mobile le long du second axe (A2) et un pignon intermédiaire (76) monté à rotation dans la base (26) est prévu entre le pignon denté (70) et la crémaillère (78).

11. Dispositif selon la revendication 10,
**caractérisé en ce que**
l'installation de fixation (40) comprend un élément de blocage (84) solidaire en rotation de l'élément de réglage (32) et coulissant axialement sur l'élément de réglage (32), l'élément de blocage (84) étant coulissant axialement entre une position de blocage dans laquelle l'élément de blocage (84) bloque le mouvement de rotation de l'élément de réglage (32) autour du premier axe (A1) et une position ouverte dans laquelle l'élément de blocage (84) permet la rotation de l'élément de réglage (32).

12. Dispositif selon l'une des revendications 10 ou 11, **caractérisé en ce que**
le pignon (70) est sous la forme d'un pignon conique (82).

13. Dispositif selon la revendication 12,
**caractérisé en ce que**
le pignon (70) est monté coulissant axialement dans la base (26), le pignon (70) étant coulissant axialement entre une position de blocage dans laquelle la rotation de l'élément de réglage (32) est bloquée autour du premier axe (A1) et une position ouverte dans laquelle la rotation de l'élément de réglage (32) est possible.

14. Dispositif selon l'une des revendications 10 ou 11, **caractérisé en ce que**
le corps de base (26) a un segment de blocage (80) correspondant au pignon (70) et le pignon (70) engrène par une liaison par la forme en position de blocage.

15. Moyen de transport de personnes et/ou de marchandises comprenant :
- un premier composant (12) et un second composant (14), les deux composants (12, 14) étant voisins l'un de l'autre en laissant un intervalle (18), et
- un dispositif (22) selon l'une des revendications précédentes, le premier composant (12) et le second composant (14) étant réglables l'un par rapport à l'autre par le dispositif (22), de façon à modifier la dimension (G) de l'intervalle (18).
